# EUROPÄISCHE PATENTSCHRIFT

(11) **EP 1 561 269 B1**
(45) Veröffentlichungstag und Bekanntmachung des Hinweises auf die Patenterteilung: **23.09.2009**
(21) Anmeldenummer: 03810365.1
(22) Anmeldetag: 24.06.2003
(51) Int. Cl.: H02J 1/10

(54) **BORDNETZ ZUR VERSORGUNG MINDESTENS EINES VERBRAUCHERS MIT ERHÖHTEN ANFORDERUNGEN AN DIE VERFÜGBARKEIT DES BORDNETZES**
ON-BOARD POWER SUPPLY NETWORK FOR SUPPLYING AT LEAST ONE CONSUMER HAVING HIGH DEMANDS IN TERMS OF THE AVAILABILITY OF THE ON-BOARD POWER SUPPLY NETWORK
RESEAU DE BORD DESTINE A ALIMENTER AU MOINS UN RECEPTEUR PRESENTANT DES EXIGENCES ELEVEES EN MATIERE DE DISPONIBILITE DU RESEAU DE BORD

(30) Priorität: 06.11.2002 DE 10251589
(43) Veröffentlichungstag der Anmeldung: 10.08.2005
(73) Patentinhaber: ROBERT BOSCH GMBH, 70442 Stuttgart (DE)
(72) Erfinder: LUTZ, Oliver, 73669 Lichtenwald (DE); RIEGER, Reinhard, 74336 Brackenheim (DE); KNEIFEL, Marcus, 71701 Schwieberdingen (DE); FINK, Holger, 70565 Stuttgart (DE)
(86) Internationale Anmeldenummer: PCT/DE2003/002099
(87) Internationale Veröffentlichungsnummer: WO 2004/042888

(56) Entgegenhaltungen:
- EP-A- 0 878 889
- EP-A- 0 897 208
- EP-A- 1 137 150
- WO-A-99/42331
- DE-A- 3 502 100
- US-A- 5 917 250
- US-B1- 6 333 570

## Beschreibung

Die Erfindung betrifft ein Bordnetz zur Versorgung mindestens eines Verbrauchers mit erhöhten Anforderungen an die Verfügbarkeit des Bordnetzes.

### Stand der Technik

Es sind bereits Bordnetze bekannt, welche zwei Batterien gleicher Nennleistung aufweisen, beispielsweise zwei Batterien mit einer Nennspannung von 12V.

Weiterhin wurden bereits sogenannte Hybrid-Bordnetze vorgeschlagen, welche zwei verschiedene Spannungsebenen aufweisen. Derartige Hybrid-Bordnetze haben zwei Batterien unterschiedlicher Nennspannung, beispielsweise eine Batterie mit 36V und eine Batterie mit 12V. Die beiden Spannungsebenen sind über einen Gleichspannungswandler miteinander verbunden. Alternativ dazu kann ein Hybrid-Bordnetz auch nur eine Batterie aufweisen, die zur Versorgung von Verbrauchern vorgesehen ist, die aus dieser Batterie versorgt werden können. Weitere Verbraucher, die eine andere Versorgungsspannung benötigen, werden über einen Gleichspannungswandler versorgt, der die von der Batterie gelieferte Spannung auf den gewünschten anderen Spannungswert umsetzt.

Aus der WO 01/21445 A1 ist ein Mehrspannungsbordnetz bekannt, welches wenigstens zwei Spannungsebenen mit zwei von Masse verschiedenen Spannungen aufweist. Weiterhin enthält dieses Mehrspannungsbordnetz einen Generator, der eine dieser Spannungen erzeugt, und wenigstens einen Spannungswandler, der aus der ersten Spannung die zweite Spannung erzeugt. Weiterhin sind Verbraucher vorgesehen, die über Schaltmittel mit einer der Spannungen betreibbar sind. Ferner weist das bekannte Mehrspannungsbordnetz Mittel zum Kurzschlussschutz auf, die die Gefahr des Auftretens eines Kurzschlusses verringern und/oder die Auswirkungen eines Kurzschlusses zwischen den beiden Spannungen verhindern und ggf. gefährdete Verbraucher im Kurzschlussfall schützen.

Aus der EP-A-1137150 ist bereits ein Zweibatteriesystem bekannt. Zwischen einer Starterbatterie und einem startrelevanten Verbraucher und zwischen einer Bordnetzbatterie und weiteren startrelevanten Verbrauchern ist jeweils ein Schaltelement ungeordnet, mittels derer wechselseitig die startrelevanten Verbraucher durch ein Batterie-Steuergerät einer Batterie zuordenbar sind, wobei das Batterie-Steuergerät zwischen der Starterbatterie und den startrelevanten Verbrauchern angeordnet ist und je nach Betriebszustand einen Stromfluss von der Bordnetzbatterie zur Starterbatterie oder von der Starterbatterie zu den startreievanten Verbrauchern erlaubt.

Aus der US 5,917,250 ist eine Isolationsschaltung zur Verwendung in einem Kraftwerk bekannt, welches, zwei Energiespeicher umfasst. Zwei Lasten können wahlweise von diesen beiden Energiespeichern versorgt werden.

### Vorteile der Erfindung

Das erfindungsgemäße Bordnetz mit den Merkmalen des Anspruchs 1 hat demgegenüber den Vorteil, dass Verbraucher, insbesondere sicherheitsrelevante Verbraucher bzw. Verbraucher, die hohe Anforderungen an die Verfügbarkeit elektrischer Energie stellen, sicher versorgt werden können. Zu diesen Verbrauchern gehören beispielsweise elektrische Lenkungssysteme und elektrische Bremssysteme. Fallen derartige sicherheitsrelevante Systeme während des Fahrtbetriebes aus, kann dies für die Insassen des jeweils betroffenen Fahrzeugs gravierende negative Folgen haben. Die Wahrscheinlichkeit eines Ausfalls derartiger sicherheitsrelevanter Systeme bzw. Verbraucher wird durch die Erfindung wesentlich reduziert.

Erzielt wird dieser Vorteil dadurch, dass der jeweilige Verbraucher über zwei verschiedene Versorgungswege mit einer Versorgungsspannung beaufschlagbar ist. Fällt die über einen der Versorgungswege gelieferte Versorgungsspannung aus, dann ist die weitere Funktion des Verbrauchers durch die über den zweiten Versorgungsweg gelieferte Versorgungsspannung weiterhin sichergestellt.

Die beiden Versorgungswege sind über Entkopplungsglieder voneinander entkoppelt. Bei den Entkopplungsgliedern kann es sich um passive Entkopplungsglieder, beispielsweise Dioden, oder um gesteuerte Schalter handeln, die von einer Schaltersteuereinheit einzeln ansteuerbar sind.

Der Gegenstand der Erfindung kann in vorteilhafter Weise eine Vielzahl verschiedenartiger Kundenwünsche abdecken. In Abhängigkeit von der Strenge der jeweiligen Sicherheitsauflagen kann durch eine angepasste intelligente Verschaltung die Versorgung des Verbrauchers sichergestellt werden. Sind die Sicherheitsauflagen weniger streng, dann können sie gemäß einer Ausführungsform dadurch erfüllt werden, dass lediglich eine redundante Leitung zum Verbraucher geführt wird, die Versorgung aber aus ein und derselben Versorgungsspannung bzw. aus demselben Teilbordnetz erfolgt. Sind die Sicherheitsanforderungen streng, dann können sie gemäß einer Ausführungsform der Erfindung dadurch erfüllt werden, dass der Verbraucher aus zwei verschiedenen Versorgungsspannungen versorgt wird, die aus verschiedenen Teilbordnetzen abgeleitet werden. Dabei kann jedes der Teilbordnetze mit einer eigenen Batterie versehen sein. Auch beim Ausfall einer dieser Batterien ist die weitere Versorgung des Sicherheitsrelevanten Verbrauchers sichergestellt.

### Zeichnung

Beispiele für verschiedene Ausführungsformen der Erfindung sind in der Zeichnung dargestellt und werden in der nachfolgenden Beschreibung näher erläutert. Im einzelnen zeigt die Figur 1 ein Ausführungsbeispiel für ein Bordnetz gemäß einer ersten Ausführungsform Figur 2 ein Ausführungsbeispiel für ein Bordnetz gemäß einer zweiten Ausführungsform, Figur 3 ein Ausführungsbeispiel für ein Bordnetz gemäß einer dritten Ausführungsform, Figur 4 ein Ausführungsbeispiel für ein Bordnetz gemäß einer vierten Ausführungsform und Figur 5 ein Ausführungsbeispiel für ein Bordnetz gemäß einer Ausführungsform der Erfindung.

### Beschreibung

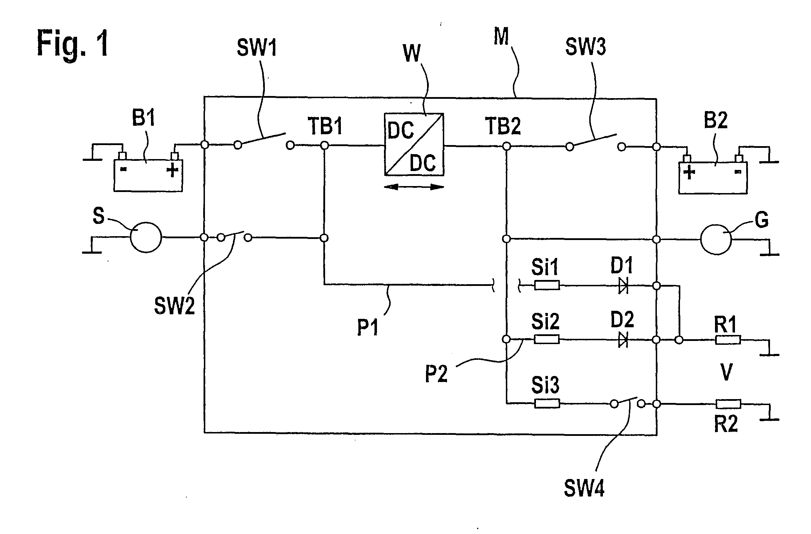

Die Figur 1 zeigt ein Ausführungsbeispiel für ein Bordnetz gemäß einer ersten Ausführungsform. Das dargestellte Bordnetz weist ein Bordnetzmodul M auf, welchem ein erstes Teilbordnetz TB1 und ein zweites Teilbordnetz TB2 angehören. Die beiden Teilbordnetze stehen über einen Gleichspannungswandler W miteinander in Verbindung.

Das Teilbordnetz TB1 ist über einen Schalter SW1 an den Pluspol einer ersten Batterie B1 angeschlossen, deren Minuspol an Masse liegt. Weiterhin ist das Teilbordnetz TB1 über einen Schalter SW2 mit einem Starter S verbunden.

Das Teilbordnetz TB2 ist über einen Schalter SW3 an den Pluspol einer zweiten Batterie B2 angeschlossen, deren Minuspol an Masse liegt. Weiterhin ist das Teilbordnetz TB2 mit einem Generator G verbunden, der im Betrieb des Fahrzeugs über den geschlossenen Schalter SW3 die Batterie B2 und über den Gleichspannungswandler W und den geschlossenen Schalter SW1 auch die Batterie B1 lädt.

Die in den Teilbordnetzen TB1 und TB2 zur Verfügung gestellten Versorgungsspannungen können gleich oder voneinander verschieden sein. Beispielsweise betragen beide Versorgungsspannungen 14V. Alternativ dazu können beide Versorgungsspannungen auch 42V betragen. Eine weitere Alternative besteht darin, dass die vom Teilbordnetz TB1 zur Verfügung gestellte Versorgungsspannung 14V und die vom Teilbordnetz TB2 zur Verfügung gestellte Versorgungsspannung 42V beträgt.

Das in der Figur 1 dargestellte Bordnetzmodul M ist zur Versorgung eines sicherheitsrelevanten Verbrauchers V vorgesehen, der in der Figur durch die Ohmschen Widerstände R1 und R2 symbolisiert ist. Dieser Verbraucher V ist über einen Schalter SW 4 zu- und abschaltbar, wobei der Schalter SW4 über eine Sicherung Si3 mit dem zweiten Teilbordnetz TB2 in Verbindung steht.

Zur Versorgung des Verbrauchers V sind zwei verschiedene Versorgungswege P1 und P2 vorgesehen, über welche der Verbraucher mit einer Versorgungsspannung beaufschlagbar ist. Der Versorgungsweg P1 enthält eine Sicherung Si1 und ein als Diode D1 realisiertes Entkopplungsglied. Über diesen Versorgungsweg P1 ist der Verbraucher V an die vom ersten Teilbordnetz TB1 gelieferte Versorgungsspannung angeschlossen. Der Versorgungsweg P2 enthält eine Sicherung Si2 und ein als Diode D2 realisiertes Entkopplungsglied. Über diesen Versorgungsweg P2 ist der Verbraucher V an die vom zweiten Teilbordnetz TB2 gelieferte Versorgungsspannung gekoppelt.

Bei dieser Ausführungsform ist der Verbraucher V stets mit beiden Teilbordnetzen verbunden, die durch die Dioden D1 und D2 rein passiv voneinander entkoppelt sind.

Liefern beide Teilbordnetze Versorgungsspannungen derselben Amplitude, dann erfolgt die Versorgung des sicherheitsrelevanten Verbrauchers V aus dem besser gestützten bzw. leistungsfähigeren Bordnetz. Fällt eines der beiden Teilbordnetze aus, dann erfolgt die weitere Versorgung des Verbrauchers V aus dem jeweils anderen Teilbordnetz.

Liefert das Teilbordnetz TB1 eine Versorgungsspannung von 14V und das Teilbordnetz TB2 eine Versorgungsspannung von 42V, dann erfolgt die normale Versorgung des Verbrauchers V aus dem Teilbordnetz TB2. Fällt dieses Teilbordnetz TB2 aus, dann erfolgt die weitere Versorgung des Verbrauchers V aus dem Teilbordnetz TB1. Dadurch ist zumindest eine reduzierte weitere Betriebsfähigkeit des Verbrauchers V sichergestellt.

Bei dieser Ausführungsform ist der sicherheitsrelevante Verbraucher V folglich über zwei verschiedene Versorgungswege an jeweils eine Versorgungsspannung angeschlossen, wobei die Versorgungsspannungen aus verschiedenen Teilbordnetzen abgeleitet werden. Die notwendige Entkopplung erfolgt rein passiv über Entkopplungsdioden.

Alternativ zu dem in der Figur 1 gezeigten Ausführungsbeispiel kann die Entkopplung beider Versorgungswege auch unter Verwendung von Schaltern erfolgen, die durch ein von einer Schaltersteuereinheit erzeugtes Schaltersteuersignal geöffnet und geschlossen werden können. Die Schaltersteuereinheit erzeugt die Schaltersteuersignale vorzugsweise in Abhängigkeit von einer Batterieüberwachung.

Bei dieser Batterieüberwachung werden mittels einer Messschaltung von den beiden Batterien Messsignale abgeleitet, die Auskunft über die Leerlaufspannung der jeweiligen Batterie geben. Diese Messsignale werden einem Vergleicher zugeführt, in welchem die gemessene Leerlaufspannung mit einem vorgegebenen Schwellenwert verglichen wird. Ist die gemessene Leerlaufspannung größer als der Schwellenwert, dann wird der Ladezustand der Batterie als ausreichend angesehen. Unterschreitet die gemessene Leerlaufspannung den Schwellenwert, dann wird der Ladezustand der Batterie als nicht mehr ausreichend angesehen. Die Schaltersteuereinheit erzeugt die Schaltersteuersignale in Abhängigkeit vom Ladezustand der Batterien derart, dass der Verbraucher an die vom leistungsfähigeren Teilbordnetz gelieferte Versorgungsspannung angeschlossen ist.

Eine genauere Messung des Ladezustands der Batterien und damit auch der Leistungsfähigkeit des jeweiligen Teilbordnetzes kann dadurch erfolgen, dass zusätzlich zur Leerlaufspannung der jeweiligen Batterie auch der Batteriestrom gemessen und ausgewertet wird.

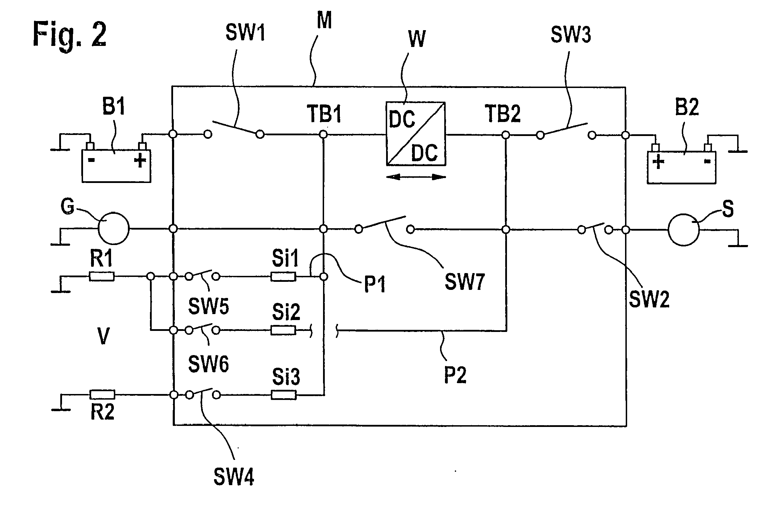

Die Figur 2 zeigt ein Ausführungsbeispiel für ein Bordnetz gemäß einer zweiten Ausführungsform. Das dargestellte Bordnetz weist ein Bordnetzmodul M auf, welchem ein erstes Teilbordnetz TB1 und ein zweites Teilbordnetz TB2 angehören. Die beiden Teilbordnetze stehen über einen Gleichspannungswandler W miteinander in Verbindung.

Das Teilbordnetz TB1 ist über einen Schalter SW1 an den Pluspol einer ersten Batterie B1 angeschlossen, deren Minuspol an Masse liegt. Weiterhin ist das Teilbordnetz TB 1 mit einem Generator G verbunden.

Das Teilbordnetz TB2 ist über einen Schalter SW 3 an den Pluspol einer zweiten Batterie B2 angeschlossen, deren Minuspol an Masse liegt. Weiterhin ist das Teilbordnetz TB2 über einen Schalter SW2 mit dem Starter S des Fahrzeugs verbunden.

Im Betrieb des Fahrzeugs wird aus dem Generator G über den geschlossenen Schalter SW1 die erste Batterie B1 und über den Gleichspannungswandler W und den geschlossenen Schalter SW3 auch die zweite Batterie B2 geladen.

Die in den Teilbordnetzen TB1 und TB2 zur Verfügung gestellten Versorgungsspannungen sind gleich. Beispielsweise betragen beide Versorgungsspannungen 14V oder 42V.

Das in der Figur 2 dargestellte Bordnetzmodul M ist zur Versorgung eines sicherheitsrelevanten Verbrauchers V vorgesehen, der in der Figur durch die Ohmschen Widerstände R1 und R2 symbolisiert ist. Dieser Verbraucher V ist über einen Schalter SW4 zu- und abschaltbar, wobei der Schalter SW4 über eine Sicherung Si3 mit dem ersten Teilbordnetz TB1 in Verbindung steht.

Zur Versorgung des Verbrauchers V sind zwei verschiedene Versorgungswege P1 und P2 vorgesehen, über welche der Verbraucher mit einer Versorgungsspannung beaufschlagbar ist. Der Versorgungsweg P1 enthält eine Sicherung Si1 und ein als Schalter SW5 realisiertes Entkopplungsglied. Über den Versorgungsweg P1 ist der Verbraucher V an die vom ersten Teilbordnetz TB1 gelieferte Versorgungsspannung angeschlossen. Der Versorgungsweg P2 enthält eine Sicherung Si2 und ein als Schalter SW6 realisiertes Entkopplungsglied. Über diesen Versorgungsweg P2 ist der Verbraucher V an die vom zweiten Teilbordnetz TB2 gelieferte Versorgungsspannung gekoppelt.

Bei dieser Ausführungsform ist der Verbraucher V entweder mit dem ersten oder mit dem zweiten Teilbordnetz verbunden. Zu diesem Zweck ist eine Schaltersteuereinheit vorgesehen, die Schalt- bzw. Ansteuersignale für die Schalter SW5 und SW6 liefert. Die Schaltersteuereinheit erzeugt die Schaltersteuersignale vorzugsweise in Abhängigkeit von einer Batterieüberwachung.

Bei dieser Batterieüberwachung werden mittels einer Messschaltung von den Batterien Messsignale abgeleitet, die Auskunft über die Leerlaufspannung der jeweiligen Batterie geben. Diese Messsignale werden einem Vergleicher zugeführt, in welchem die gemessene Leerlaufspannung mit einem vorgegebenen Schwellenwert verglichen wird. Ist die gemessene Leerlaufspannung größer als der Schwellenwert, dann wird der Ladezustand der Batterie als ausreichend angesehen. Unterschreitet die gemessene Leerlaufspannung den Schwellenwert, dann wird der Ladezustand der Batterie als nicht mehr ausreichend angesehen. Die Schaltersteuereinheit erzeugt die Schaltersteuersignale in Abhängigkeit vom Ladezustand der Batterien derart, dass der Verbraucher an die vom leistungsfähigeren Teilbordnetz gelieferte Versorgungsspannung angeschlossen ist.

Eine genauere Messung des Ladezustands der Batterien und damit auch der Leistungsfähigkeit des jeweiligen Teilbordnetzes kann dadurch erfolgen, dass zusätzlich zur Leerlaufspannung der jeweiligen Batterie auch der Batteriestrom gemessen und ausgewertet wird.

Bei dieser Ausführungsform ist der sicherheitsrelevante Verbraucher V folglich über zwei verschiedene Versorgungswege an je eine Versorgungsspannung anschließbar, wobei die Versorgungsspannungen aus verschiedenen Teilbordnetzen abgeleitet werden. Die Entkopplung der Versorgungswege erfolgt hier aktiv gesteuert über die Schalter SW5 und SW6, von denen stets einer im geöffneten und der jeweils andere im geschlossenen Zustand ist. Da die beiden Teilbordnetze bei dieser Ausführungsform Versorgungsspannungen gleicher Amplituden liefern, können die beiden Teilbordnetze zur gegenseitigen Stützung über den Schalter SW7 miteinander verbunden bzw. verkoppelt werden.

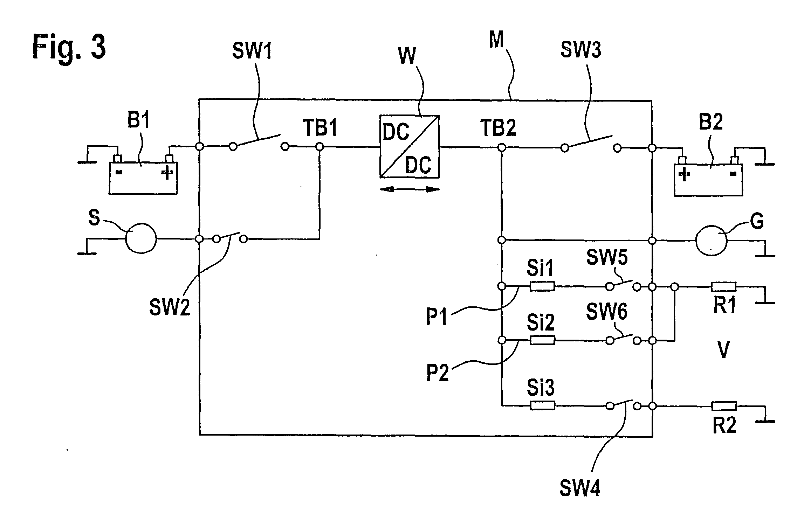

Die Figur 3 zeigt ein Ausführungsbeispiel für ein Bordnetz gemäß einer dritten Ausführungsform. Das dargestellte Bordnetz weist ein Bordnetzmodul M auf, welchem ein erstes Teilbordnetz TB1 und ein zweites Teilbordnetz TB2 angehören. Die beiden Teilbordnetze stehen über einen Gleichspannungswandler W miteinander in Verbindung.

Das Teilbordnetz TB1 ist über einen Schalter SW1 an den Pluspol einer ersten Batterie B1 angeschlossen, deren Minuspol an Masse legt. Weiterhin ist das Teilbordnetz TB1 über einen Schalter SW2 mit einem Starter S verbunden.

Das Teilbordnetz TB2 ist über einen Schalter SW3 an den Pluspol einer zweiten Batterie B2 angeschlossen, deren Minuspol an Masse liegt. Weiterhin ist das Teilbordnetz TB2 mit einem Generator G verbunden, der im Betrieb des Fahrzeugs über den geschlossen Schalter SW3 die Batterie B2 und über den Gleichspannungswandler W und den geschlossenen Schalter SW1 auch die Batterie B1 lädt.

Die in den Teilbordnetzen TB1 und TB2 zur Verfügung gestellten Versorgungsspannungen können gleich oder voneinander verschieden sein. Beispielsweise betragen beide Versorgungsspannungen 14V. Alternativ dazu können beide Versorgungsspannungen auch 42V betragen. Eine weitere Alternative besteht darin, dass die vom Teilbordnetz TB1 zur Verfügung gestellte Versorgungsspannung 14V und die vom Teilbordnetz TB2 zur Verfügung gestellte Versorgungsspannung 42V beträgt.

Das in der Figur 3 dargestellte Bordnetzmodul M ist zur Versorgung eines sicherheitsrelevanten Verbrauchers V vorgesehen, der in der Figur durch die Ohmschen Widerstände R1 und R2 symbolisiert ist. Dieser Verbraucher V ist über einen Schalter SW4 zu- und abschaltbar, wobei der Schalter SW4 über eine Sicherung Si3 mit dem zweiten Teilbordnetz TB2 in Verbindung steht.

Zur Versorgung des Verbrauchers V sind zwei verschiedene Versorgungswege P1 und P2 vorgesehen, über welche der Verbraucher mit einer Versorgungsspannung beaufschlagbar ist. Der Versorgungsweg P1 enthält eine Sicherung Si1 und ein als Schalter SW5 realisiertes Entkopplungsglied. Über diesen Versorgungsweg P1 ist der Verbraucher V an die vom zweiten Teilbordnetz TB2 gelieferte Versorgungsspannung angeschlossen. Der Versorgungsweg P2 enthält eine Sicherung Si2 und ein als Schalter SW6 realisiertes Entkopplungsglied. Über diesen Versorgungsweg P2 ist der Verbraucher V ebenfalls an die vom zweiten Teilbordnetz TB2 gelieferte Versorgungsspannung angeschlossen.

Bei dieser Ausführungsform ist der Verbraucher V entweder über den Versorgungsweg P1 oder über den Versorgungsweg P2 mit dem zweiten Teilbordnetz TB2 verbunden, so dass die Versorgung des Verbrauchers in beiden Fällen aus ein und demselben Teilbordnetz erfolgt. Zur Umschaltung zwischen den beiden Versorgungswegen P1 und P2 ist eine Schaltersteuereinheit vorgesehen, die die Schalt- bzw. Ansteuersignale für die Schalter SW5 und SW6 liefert. Die Schaltersteuereinheit erzeugt die Schaltersteuersignale in Abhängigkeit von Ausgangssignalen von Sensoren, mittels derer der Zustand der beiden Versorgungswege ständig überwacht wird. Kann einer der Versorgungswege die Versorgungsspannung aufgrund einer Störung nicht mehr zur Verfügung stellen, dann wird auf den anderen Versorgungsweg umgeschaltet.

Bei dieser Ausführungsform ist folglich eine redundante Versorgungsleitung zum Verbraucher vorgesehen, so dass der Verbraucher bei einer Unterbrechung der "Hauptleitung" über die redundante Versorgungsleitung mit Energie versorgt werden kann.

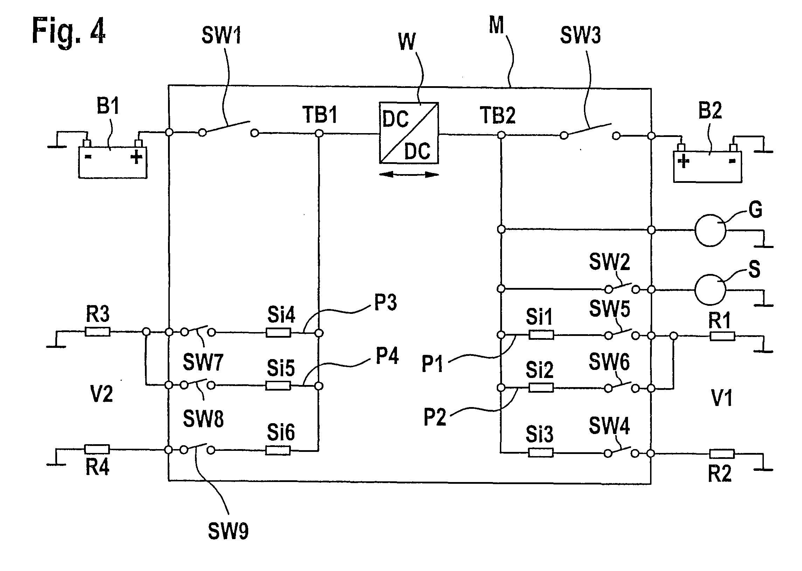

Die Figur 4 zeigt ein Ausführungsbeispiel für ein Bordnetz gemäß einer vierten Ausführungsform. Das dargestellte Bordnetz weist ein Bordnetzmodul M auf, welchem ein erstes Teilbordnetz TB1 und ein zweites Teilbordnetz TB2 angehören. Die beiden Teilbordnetze TB1 und TB2 stehen über einen Gleichspannungswandler W miteinander in Verbindung.

Das Teilbordnetz TB1 ist über einen Schalter SW1 an den Pluspol einer ersten Batterie B1 angeschlossen, deren Minuspol an Masse liegt.

Das Teilbordnetz TB2 ist über einen Schalter SW3 an den Pluspol einer zweiten Batterie B2 angeschlossen, deren Minuspol an Masse liegt. Weiterhin ist das Teilbordnetz TB2 mit einem Generator G verbunden, der im Betrieb des Fahrzeugs über den geschlossenen Schalter SW3 die Batterie B2 und über den Gleichspannungswandler W und den geschlossenen Schalter SW1 auch die Batterie B1 lädt. Ferner ist das Teilbordnetz TB12 über einen Schalter SW2 mit dem Starter S des Fahrzeugs verbunden.

Die in den Teilbordnetzen TB1 und TB2 zur Verfügung gestellten Versorgungsspannungen können gleich oder voneinander verschieden sein. Beispielsweise betragen beide Versorgungsspannungen 14V. Alternativ dazu können beide Versorgungsspannungen auch 42V betragen. Eine weitere Alternative besteht darin, dass die vom Teilbordnetz TB1 zur Verfügung gestellte Versorgungsspannung 14V und die vom Teilbordnetz TB2 zur Verfügung gestellte Versorgungsspannung 42V beträgt.

Das in der Figur 4 dargestellte Bordnetzmodul M ist zur Versorgung sicherheitsrelevanter Verbraucher V1 und V2 vorgesehen, die in der Figur durch die Ohmschen Widerstände R1 und R2 bzw. R3 und R4 symbolisiert sind. Diese Verbraucher sind über einen Schalter SW4 bzw. SW9 zu- und abschaltbar, wobei der Schalter SW4 über eine Sicherung Si3 mit dem zweiten Teilbordnetz TB2 und der Schalter SW9 über eine Sicherung Si6 mit dem ersten Teilbordnetz TB1 in Verbindung steht.

Zur Versorgung des Verbrauchers V1 sind zwei verschiedene Versorgungswege P1 und P2 vorgesehen, über welche der Verbraucher mit einer Versorgungsspannung beaufschlagbar ist. Der Versorgungsweg P1 enthält eine Sicherung Si1 und ein als Schalter SW5 realisiertes Entkopplungsglied. Über diesen Versorgungsweg P1 ist der Verbraucher V1 an die vom zweiten Teilbordnetz TB2 gelieferte Versorgungsspannung angeschlossen. Der Versorgungsweg P2 enthält eine Sicherung Si2 und ein als Schalter SW6 realisiertes Entkopplungsglied. Über diesen Versorgungsweg P2 ist der Verbraucher V1 ebenfalls an die vom zweiten Teilbordnetz TB2 gelieferte Versorgungsspannung angeschlossen.

Bei dieser Ausführungsform ist der Verbraucher V1 entweder über den Versorgungsweg P1 oder über den Versorgungsweg P2 mit dem zweiten Teilbordnetz TB2 verbunden, so dass die Versorgung des Verbrauchers in beiden Fällen aus demselben Teilbordnetz erfolgt. Zur Umschaltung zwischen den beiden Versorgungswegen P1 und P2 ist eine Schaltersteuereinheit vorgesehen, die die Schalt- bzw. Ansteuersignale für die Schalter SW5 und SW6 liefert. Die Schaltersteuereinheit erzeugt die Schaltersteuersignale in Abhängigkeit von Ausgangssignalen von Sensoren, mittels derer der Zustand der beiden Versorgungswege P1 und P2 ständig überwacht wird. Kann einer dieser Versorgungswege die Versorgungsspannung aufgrund einer Störung nicht mehr zur Verfügung stellen, dann wird auf den anderen Versorgungsweg umgeschaltet.

Zur Versorgung des Verbrauchers V2 sind zwei verschiedene Versorgungswege P3 und P4 vorgesehen, über welche der Verbraucher V2 mit einer Versorgungsspannung beaufschlagbar ist. Der Versorgungsweg P3 enthält eine Sicherung Si4 und ein als Schalter SW7 realisiertes Entkopplungsglied.. Über diesen Versorgungsweg P3 ist der Verbraucher V2 an die vom ersten Teilbordnetz TB1 gelieferte Versorgungsspannung angeschlossen. Der Versorgungsweg P4 enthält eine Sicherung Si5 und ein als Schalter SW8 realisiertes Entkopplungsglied. Über diesen Versorgungsweg P4 ist der Verbraucher V2 ebenfalls an die vom ersten Teilbordnetz TB1 gelieferte Versorgungsspannung anschließbar.

Bei dieser Ausführungsform ist der Verbraucher V2 entweder über den Versorgungsweg P3 oder über den Versorgungsweg P4 mit dem ersten Teilbordnetz TB1 verbunden, so dass die Versorgung des Verbrauchers in beiden Fällen aus demselben Teilbordnetz erfolgt. Zur Umschaltung zwischen den beiden Versorgungswegen P3 und P4 ist eine Schaltersteuereinheit vorgesehen, die die Schalt- bzw. Ansteuersignale für die Schalter SW7 und SW8 liefert. Die Schaltersteuereinheit erzeugt die Schaltersteuersignale in Abhängigkeit von Ausgangssignalen von Sensoren, mittels derer der Zustand der beiden Versorgungswege P3 und P4 ständig überwacht wird. Kann einer dieser Versorgungswege die Versorgungsspannung aufgrund einer Störung nicht mehr zur Verfügung stellen, dann wird auf den anderen Versorgungsweg umgeschaltet.

Bei dieser Ausführungsform ist folglich zu jedem der sicherheitsrelevanten Verbraucher eine redundante Versorgungsleitung vorgesehen, so dass der Verbraucher bei einer Unterbrechung der jeweiligen "Hauptleitung" über die zugehörige redundante Versorgungsleitung mit Energie versorgt werden kann.

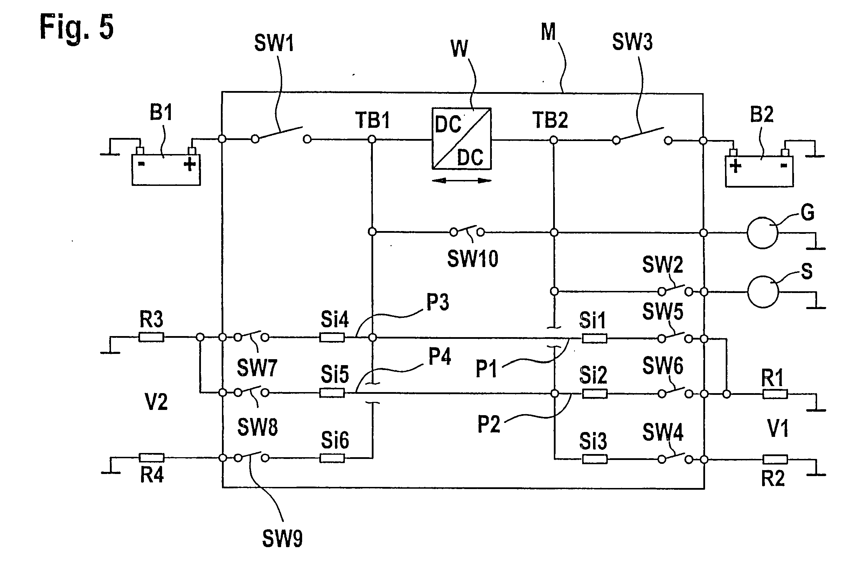

Die Figur 5 zeigt ein Ausführungsbeispiel für ein Bordnetz gemäß einer Ausführungsform der Erfindung. Das dargestellte Bordnetz weist ein Bordnetzmodul M auf, welchem ein erstes Teilbordnetz TB1 und ein zweites Teilbordnetz TB2 angehören. Die beiden Teilbordnetze stehen über einen Gleichspannungswandler W miteinander in Verbindung.

Das Teilbordnetz TB1 ist über einen Schalter SW1 an den Pluspol einer ersten Batterie B1 angeschlossen, deren Minuspol an Masse liegt.

Das Teilbordnetz TB2 ist über einen Schalter SW3 an den Pluspol einer zweiten Batterie B2 angeschlossen, deren Minuspol an Masse liegt. Weiterhin ist das Teilbordnetz TB2 mit einem Generator G verbunden, der im Betrieb des Fahrzeugs über den geschlossenen Schalter SW3 die Batterie B2 und über den Gleichspannungswandler W und den geschlossenen Schalter SW1 auch die Batterie B1 lädt. Ferner ist das Teilbordnetz TB2 über einen Schalter S2 mit dem Starter S des Fahrzeugs verbunden.

Die in den Teilbordnetzen TB1 und TB2 zur Verfügung gestellten Versorgungsspannungen sind gleich. Beispielsweise betragen beide Versorgungsspannungen 14V oder 42 V.

Das in der Figur 5 dargestellte Bordnetzmodul M ist zur Versorgung sicherheitsrelevanter Verbraucher V1 und V2 vorgesehen, die in der Figur durch die Ohmschen Widerstände R1 und R2 bzw. R3 und R4 symbolisiert sind. Diese Verbraucher sind über einen Schalter SW4 bzw. SW9 zu- und abschaltbar, wobei der Schalter SW4 über eine Sicherung Si3 mit dem zweiten Teilbordnetz TB2 und der Schalter SW9 über eine Sicherung Si6 mit dem ersten Teilbordnetz TB1 in Verbindung steht.

Zur Versorgung des Verbrauchers V1 sind zwei verschiedene Versorgungswege P1 und P2 vorgesehen, über welche der Verbraucher V1 mit einer Versorgungsspannung beaufschlagbar ist. Der Versorgungsweg P1 enthält eine Sicherung Si1 und ein als Schalter SW5 realisiertes Entkopplungsglied. Über diesen Versorgungsweg P1 ist der Verbraucher V1 an die vom ersten Teilbordnetz TB1 gelieferte Versorgungsspannung anschließbar. Der Versorgungsweg P2 enthält eine Sicherung Si2 und ein als Schalter SW6 realisiertes Entkopplungsglied. Über diesen Versorgungsweg P2 ist der Verbraucher V1 an die vom zweiten Teilbordnetz TB2 gelieferte Versorgungsspannung anschließbar.

Bei dieser Ausführungsform ist der Verbraucher V1 entweder über den Versorgungsweg P1 mit dem ersten Teilbordnetz TB1 oder über den Versorgungsweg P2 mit dem zweiten Teilbordnetz TB2 verbunden, so dass die Versorgung des Verbrauchers V1 alternativ aus dem ersten oder dem zweiten Teilbordnetz erfolgt. Zur Umschaltung zwischen den beiden Versorgungswegen P1 und P2 ist eine Schaltersteuereinheit vorgesehen, die die Schalt- bzw. Ansteuersignale für die Schalter SW5 und SW6 liefert. Die Schaltersteuereinheit erzeugt die Schaltersteuersignale in Abhängigkeit von Ausgangssignalen einer Batterieüberwachung.

Bei dieser Batterieüberwachung werden mittels einer Messschaltung von den beiden Batterien Messsignale abgeleitet, die Auskunft über die Leerlaufspannung der jeweiligen Batterie geben. Diese Messsignale werden einem Vergleicher zugeführt, in welchem die gemessene Leerlaufspannung mit einem vorgegebenen Schwellenwert verglichen wird. Ist die gemessene Leerlaufspannung größer als der Schwellenwert, dann wird der Ladezustand der Batterie als ausreichend angesehen. Unterschreitet die gemessene Leerlaufspannung den Schwellenwert, dann wird der Ladezustand der Batterie als nicht mehr ausreichend angesehen. Die Schaltersteuereinheit erzeugt die Schaltersteuersignale in Abhängigkeit vom Ladezustand der Batterien derart, dass der Verbraucher an die vom leistungsfähigeren Teilbordnetz gelieferte Versorgungsspannung angeschlossen ist.

Eine genauere Messung des Ladezustands der Batterien und damit auch der Leistungsfähigkeit des jeweiligen Teilbordnetzes kann dadurch erfolgen, dass zusätzlich zur Leerlaufspannung der jeweiligen Batterie auch der Batteriestrom gemessen und ausgewertet wird.

Zur Versorgung des Verbrauchers V2 sind zwei verschiedene Versorgungswege P3 und P4 vorgesehen, über welche der Verbraucher V2 mit einer Versorgungsspannung beaufschlagbar ist. Der Versorgungsweg P3 enthält eine Sicherung Si4 und ein als Schalter SW7 realisiertes Entkopplungsglied. Über diesen Versorgungsweg P3 ist der Verbraucher V2 an die vom ersten Teilbordnetz TB1 gelieferte Versorgungsspannung angeschlossen. Der Versorgungsweg P4 enthält eine Sicherung Si5 und ein als Schalter SW8 realisiertes Entkopplungsglied. Über diesen Versorgungsweg P4 ist der Verbraucher V2 an die vom zweiten Teilbordnetz TB2 gelieferte Versorgungsspannung angeschlossen.

Bei dieser Ausführungsform ist der Verbraucher V2 alternativ über den Versorgungsweg P3 mit dem ersten Teilbordnetz TB1 oder über den Versorgungsweg P4 mit dem zweiten Teilbordnetz TB2 verbunden, so dass die Versorgung des Verbrauchers alternativ aus dem ersten oder dem zweiten Teilbordnetz erfolgt. Zur Umschaltung zwischen den beiden Versorgungswegen P3 und P4 ist eine Schaltersteuereinheit vorgesehen, die die Schalt- bzw. Ansteuersignale für die Schalter SW7 und SW8 liefert.

Wie aus der Figur 5 ersichtlich ist, enthält bei dieser Ausführungsform das Bordnetz zwei sicherheitsrelevante Verbraucher V1 und V2, die jeweils alternativ aus dem ersten oder zweiten Teilbordnetz versorgt werden. Die Entkopplung zwischen den Teilbordnetzen bzw. Versorgungswegen erfolgt jeweils aktiv gesteuert. Da die beiden. Teilbordnetze bei dieser Ausführungsform Versorgungsspannungen gleicher Amplitude liefern, können die beiden Teilbordnetze zur gegenseitigen Stützung über den Schalter SW10 miteinander verbunden bzw. verkoppelt werden.

Ein bevorzugtes Anwendungsbeispiel der in der Figur 5 gezeigten Ausführungsform sind Zweikreis-Bremssysteme. Dabei ist beispielsweise der erste Kreis für die rechte Vorder- und die linke Hinterbremse und der zweite Kreis für die linke Vorder- und die rechte Hinterbremse verantwortlich. Der erste Kreis entspricht in der Figur 5 dem ersten sicherheitsrelevanten Verbraucher V1 und der zweite Kreis dem zweiten sicherheitsrelevanten Verbraucher V2.

Bei den oben beschriebenen erfindungsgemäßen Bordnetztopologien wird die Sicherheit von elektrischen Energiebordnetzen jeweils durch eine geeignete intelligente Anschaltung des bzw. der sicherheitsrelevanten Verbraucher an die Versorgungsquelle bzw. Versorgungsquellen erhöht, wobei jeder sicherheitsrelevante Verbraucher über zwei alternative Versorgungswege mit einer Versorgungsquelle verbindbar ist. Insbesondere werden verschiedene Lösungen aufgezeigt, die in Bezug auf Kosten und Funktionalität unterschiedlichen Kundenwünschen gerecht werden.

### Bezugszeichenliste:

- B1: Erste Batterie
- B2: Zweite Batterie
- M: Bordnetzmodul
- TB1: Teilbordnetz 1
- TB2: Teilbordnetz 2
- W: Gleichspannungswandler
- G: Generator
- V, V1, V2: Verbraucher
- S: Starter
- P1-P4: Versorgungswege
- D1, D2: Dioden
- Si1 - Si6: Sicherungen
- SW1 - SW10: Schalter

## Patentansprüche

1. Bordnetz, mit wenigstens zwei Teilbdrdnetzen, in denen jeweils eine Versorgungsspannung zur Verfügung steht, und wenigstens einem Verbraucher, der an eines der Teilbordnetze angeschlossen ist, wobei der Verbraucher (V) über zwei verschiedene Versorgungswege (P1, P2) mit einer Versorgungsspannung beaufschlagbar ist, wobei die Versorgungswege durch Entkopplungsmittel (D1, D2; SW5, SW6) voneinander entkoppelt sind, wobei das Bordnete
zwei Verbraucher (V1; V2) aufweist, der erste Verbraucher im ersten Teilbordnetz und der zweite Verbraucher im zweiten Teilbordnetz angeordnet ist, jeder der Verbraucher über zwei verschiedene Versorgungswege mit einer Versorgungsspannung beaufschlagbar ist und in jedem der Versorgungswege ein Schalter vorgesehen ist,
**dardurch gekennzeichnet**, dass die beiden Teilbordnetze Versorgungsspannungen gleicher Amplitude zur Verfügung stellen, der erste und der zweite Verbraucher jeweils über ihren ersten Versorgungsweg mit der aus einem der Teilbordnetze abgeleiteten Versorgungsspannung und über ihren zweiten Versorgungsweg mit aus dem anderen Teilbordnetze abgeleiteten Versorgungsspannung beaufschlagbar sind.

2. Bordnetz nach Anspruch 1, **dadurch gekennzeichnet dass** die Entkopplungsmittel Schalter (SW5, SW6) sind

3. Bordnetz nach Anspruch 2, **dadurch gekennzeichnet, dass** es eine Schaltersteuereinheit aufweist, die Schaltersteuersignale derart erzeugt, dass einer der Schalter geschlossen und gleichzeitig der andere geöffnet ist.

4. Bordnetz nach Anspruch 3, **dadurch gekennzeichnet, dass** die Schaltersteuereinheit die Schaltersteuersignale in Abhängigkeit von Messsignalen erzeugt, die Auskunft über die Verfügbarkeit der jeweiligen Versorgungsspannung und/oder die Leistungsfähigkeit des jeweiligen Bordnetzes geben.

5. Bordnetz nach Anspruch 4, **dadurch gekennzeichnet, dass** es Batterieüberwachungsmittel aufweist, die eine Messschaltung zur Messung der Leerblauf-Spannung einer Batterie und einen Vergleicher enthalten, in welchem die gemessene Leerlaufspannung mit einem Schwellenwert verglichen wird, und dass die Schaltersteuereinheit die Schaltersteuersignale in Abhängigkeit von der gemessenen Leerlaufspannung erzeugt.

6. Bordnetz nach Anspruch 4, **dadurch gekennzeichnet, dass** es eine Messschaltung zur Messung der Leerlaufspannung einer Batterie und einen Strommesser zur Messung des Batteriestroms aufweist und die Schaltersteuereinheit die Schaltersteuersignale in Abhängigkeit von der gemessenen Leerlaufspannung und dem gemessenen Batteriestrom erzeugt.

7. Bordnetz nach Anspruch 1, **dadurch gekennzeichnet, dass** die Entkopplungsmittel Dioden (D1, D2) sind.

8. Bordnetz nach einem der vorhergehenden Ansprüche, **dadurch gekennzeichnet, dass** der Verbraucher über den ersten Versorgungsweg (P1) mit einer aus dem ersten Teilbordnetz (TB1) abgeleiteten Versorgungsspannung und über den zweiten Versorgungsweg (P2) mit einer aus dem zweiten Teilbordnetz (TB12) abgeleiteten Versorgungsspannung beaufschlagbar ist.

9. Bordnetz nach einem der Ansprüche 1 bis 7, **dadurch gekennzeichnet, dass** der Verbraucher über die beiden Versorgungswege mit einer aus demselben Teilbordnetze abgeleiteten Versorgungsspannung beaufschlagbar ist.

10. Bordnetz nach einem der vorhergehenden Ansprüche, **dadurch gekennzeichnet, dass** die beiden Teilbordnetze (TB1, TB2) über einen Gleichspannungswandler-(W) miteinander verbunden sind.

11. Bordnetz nach einem der vorhergehenden Ansprüche, **dadurch gekennzeichnet, dass** die beiden Teilbordnetze Versorgungsspannungen gleicher Amplitude zur Verfügung stellen und dass die beiden Teilbordnetze über einen Schalter (Sw7; SW10) miteinander koppelbar sind.

## Claims

1. On-board power supply network, having at least two component on-board power supply networks, in each of which a supply voltage is available, and at least one load which is connected to one of the component on-board power supply networks, wherein a supply voltage can be applied to the load (V) via two different supply paths (P1, P2), wherein the supply paths are isolated from one another by isolating means (D1, D2; SW5, SW6), wherein the on-board power supply network has two loads (V1; V2), the first load is arranged in the first component on-board power supply network, and the second load is arranged in the second component on-board power supply network, and a supply voltage can be applied to each of the loads via two different supply paths, and a switch is provided in each of the supply paths, **characterized in that** the two component on-board power supply networks make available supply voltages of the same amplitude, and the supply voltage which is derived from one of the component on-board power supply networks can be applied to the first and second loads respectively via their first supply path, and a supply voltage which is derived from the other component on-board power supply network can be applied to the first and second loads respectively via their second supply path.

2. On-board power supply network according to Claim 1, **characterized in that** the isolating means are switches (SW5, SW6).

3. On-board power supply network according to Claim 2, **characterized in that** said on-board power supply network has a switch control unit which generates switch control signals in such a way that one of the switches is closed and at the same time the other is opened.

4. On-board power supply network according to Claim 3, **characterized in that** the switch control unit generates the switch control signals as a function of measurement signals which provide information about the availability of the respective supply voltage and/or the performance capability of the respective on-board power supply network.

5. On-board power supply network according to Claim 4, **characterized in that** it has battery-monitoring means which contain a measuring circuit for measuring the open-circuit voltage of a battery, and a comparator in which the measured open-circuit voltage is compared with a threshold voltage, and **in that** the switch control unit generates the switch control signals as a function of the measured open-circuit voltage.

6. On-board power supply network according to Claim 4, **characterized in that** it has a measuring circuit for measuring the open-circuit voltage of a battery, and an ammeter for measuring the battery current, and the switch control unit generates the switch control signals as a function of the measured open-circuit voltage and the measured battery current.

7. On-board power supply network according to Claim 1, **characterized in that** the isolating means are diodes (D1, D2).

8. On-board power supply network according to one of the preceding claims, **characterized in that** a supply voltage which is derived from the first component on-board power supply network (TB1) can be applied to the load via the first supply path (P1), and a supply voltage which is derived from the second component on-board power supply network (TB2) can be applied to the load via the second supply path (P2).

9. On-board power supply network according to one of Claims 1 to 7, **characterized in that** a supply voltage which is derived from the same component on-board power supply network can be applied to the load via the two supply paths.

10. On-board power supply network according to one of the preceding claims, **characterized in that** the two component on-board power supply networks (TB1, TB2) are connected to one another via a direct voltage transformer (W).

11. On-board power supply network according to one of the preceding claims, **characterized in that** the two component on-board power supply networks make available supply voltages of the same amplitude, and **in that** the two component on-board power supply networks can be coupled to one another via a switch (SW7; SW10).

## Revendications

1. Réseau de bord qui comprend au moins deux parties de réseau de bord qui disposent chacune d'une tension d'alimentation et qui présente au moins un consommateur raccordé à l'une des parties du réseau de bord,
une tension d'alimentation pouvant être appliquée sur le consommateur (V) par deux parcours d'alimentation (P1, P2) différents,
les parcours d'alimentation pouvant être découplés l'un de l'autre par des moyens de découplage (D1, D2; SW5, SW6),
le réseau de bord présentant deux consommateurs (V1; V2), le premier consommateur étant situé dans la première partie du réseau de bord et le deuxième consommateur dans la deuxième partie du réseau de bord,
une tension d'alimentation pouvant être appliquée sur chacun des consommateurs par deux parcours d'alimentation différents et un commutateur étant prévu dans chacun des parcours d'alimentation,
**caractérisé en ce que**
les deux parties du réseau de bord délivrent des tensions d'alimentation de même amplitude,
**en ce qu'**une tension d'alimentation délivrée par l'une des parties du réseau de bord peut être appliquée sur le premier et sur le deuxième consommateur, chaque fois par leur premier parcours d'alimentation, et
**en ce qu'**une tension d'alimentation prélevée sur l'autre partie du réseau de bord peut être appliquée sur le premier et sur le deuxième consommateur par leur deuxième parcours d'alimentation.

2. Réseau de bord selon la revendication 1, **caractérisé en ce que** les moyens de découplage sont des commutateurs (SW5, SW6).

3. Réseau de bord selon la revendication 2, **caractérisé en ce qu'**il présente une unité de commande de commutation qui forme des signaux de commande de commutation de telle sorte que l'un des commutateurs soit fermé en même temps que l'autre est ouvert.

4. Réseau de bord selon la revendication 3, **caractérisé en ce que** l'unité de commande de commutation forme les signaux de commande de commutation en fonction de signaux de mesure qui donnent une information sur la disponibilité de chaque tension d'alimentation et/ou sur la capacité de fourniture d'énergie de chaque réseau de bord.

5. Réseau de bord selon la revendication 4, **caractérisé en ce qu'**il présente des moyens de surveillance de batterie qui contiennent un circuit de mesure qui mesure la tension à vide d'une batterie ainsi qu'un comparateur dans lequel la tension à vide mesurée est comparée à une valeur de seuil et **en ce que** l'unité de commande de commutation forme les signaux de commande de commutation en fonction de la tension à vide mesurée.

6. Réseau de bord selon la revendication 4, **caractérisé en ce qu'**il présente un circuit de mesure qui mesure la tension à vide d'une batterie ainsi qu'un mesureur de courant qui mesure le courant de batterie et **en ce que** l'unité de commande de commutation forme les signaux de commande de commutation en fonction de la tension à vide mesurée et du courant de batterie mesuré.

7. Réseau de bord selon la revendication 1, **caractérisé en ce que** les moyens de découplage sont des diodes (D1, D2).

8. Réseau de bord selon l'une des revendications précédentes, **caractérisé en ce qu'**une tension d'alimentation prélevée sur la première partie (TB1) du réseau de bord peut être appliquée sur le consommateur par le premier parcours d'alimentation (P1) et **en ce qu'**une tension d'alimentation prélevée sur la deuxième partie (TB2) du réseau de bord peut lui être appliquée par l'intermédiaire du deuxième parcours d'alimentation (P2).

9. Réseau de bord selon l'une des revendications 1 à 7, **caractérisé en ce qu'**une tension d'alimentation prélevée sur une même partie du réseau de bord peut être appliquée sur le consommateur par l'intermédiaire des deux parcours d'alimentation.

10. Réseau de bord selon l'une des revendications précédentes, **caractérisé en ce que** les deux parties (TB1, TB2) du réseau de bord sont reliées l'une à l'autre par un convertisseur de tension continue (W).

11. Procédé selon l'une des revendications précédentes, **caractérisé en ce que** les deux parties du réseau de bord délivrent des tensions d'alimentation de même amplitude et **en ce que** les deux parties du réseau de bord peuvent être accouplées l'une à l'autre par un commutateur (SW7; SW10).
